Europäisches Patentamt

European Patent Office

Office européen des brevets

(19)

(11) **EP 0 794 396 A1**

(12) **DEMANDE DE BREVET EUROPEEN**

(43) Date de publication:
**10.09.1997 Bulletin 1997/37**

(51) Int Cl.$^6$: **F25B 39/00**

(21) Numéro de dépôt: **97400524.1**

(22) Date de dépôt: **07.03.1997**

(84) Etats contractants désignés:
**DE DK ES FR GB IT SE**

(30) Priorité: **08.03.1996 FR 9602964**
**14.02.1997 IT MI970315**

(71) Demandeur: **Société d'Electromenager du Nord Selnor**
**59811 Lesquin (FR)**

(72) Inventeurs:
• **Charcosset, Henri, THOMSON-CSF, SCPI**
**94117 Arcueil Cédex (FR)**

• **Clodic, Denis, THOMSON-CSF, SCPI**
**94117 Arcueil Cédex (FR)**
• **Xu, Xiaoqiang, THOMSON-CSF, SCPI**
**94117 Arcueil Cédex (FR)**

(74) Mandataire: **Benoit, Monique et al**
**THOMSON-CSF-S.C.P.I.,**
**13, Avenue du Président**
**Salvador Allende**
**94117 Arcueil Cédex (FR)**

(54) **Un appareil à génération de froid comportant un échangeur de chaleur à accumulation**

(57)    Un échangeur de chaleur (71) tel qu'un évaporateur ou en condenseur comporte un accumulateur thermique (74) en rapport conductif avec un fluide frigorigène (73), dont le choix et le dimensionnement permettent de réaliser une diminution du temps de fonctionnement du compresseur, ainsi que de son rapport de compression, et par suite, de la consommation énergétique de l'appareil à génération de froid. Le compresseur est maintenu en fonctionnement jusqu'au changement de phase complet d'un liquide eutectique (74).

FIG. 6

**Description**

L'invention a pour objet un échangeur de chaleur, tel qu'un évaporateur ou un condenseur, à accumulation, utilisable par exemple dans un réfrigérateur ou un congélateur ou un appareil combiné.

Un appareil à génération de froid, tel qu'un réfrigérateur ou un congélateur, comporte habituellement dans son circuit frigorifique un évaporateur, qui permet à un fluide liquide de se détendre, se transformer en gaz et produire du froid, et un condenseur qui retransforme ce gaz en fluide liquide ; le circuit frigorifique comporte encore un compresseur qui aspire le fluide frigorigène gazeux sortant de l'évaporateur, le comprime et le refoule vers le condenseur, le cycle se reproduisant jusqu'à ce que le besoin de froid soit satisfait.

L'air du volume intérieur du réfrigérateur ou du congélateur doit par ailleurs être maintenu dans des zones de température définies par des normes, par exemple de 1°C à 5°C pour un réfrigérateur. Le contrôle marche/arrêt du compresseur s'effectue par un thermostat contrôlant directement ou indirectement cette température d'air. En pratique, on observe que le compresseur se met fréquemment en marche pour faire descendre la température de l'évaporateur à des valeurs très basses (jusqu'à -20°C pour un réfrigérateur) par rapport à la température recherchée pour l'air et, ce, vingt-quatre heures sur vingt-quatre, induisant de ce fait une consommation électrique qui devient importante.

Le problème que l'invention se propose de résoudre est celui de la diminution de la consommation électrique d'un appareil à génération de froid.

Pour cela, l'invention vise à réaliser une diminution du temps de fonctionnement du compresseur ainsi que de son rapport de compression.

A cet effet, on dispose dans l'échangeur de chaleur un accumulateur thermique en rapport conductif direct avec le fluide frigorigène, l'accumulateur étant choisi et dimensionné pour modifier la courbe d'échange de chaleur entre le fluide frigorigène et l'air ambiant en y créant des sortes de paliers, c'est-à-dire en maintenant sensiblement fixe la température de l'échangeur de chaleur pendant une durée définie par la quantité du matériau accumulateur et, ce, à une température choisie par le choix du matériau accumulateur, aussi proche que possible de la température moyenne de l'air, le fonctionnement du compresseur étant arrêté en fin de palier.

Plus précisément, la présente invention a pour objet un échangeur de chaleur pour appareil à génération de froid comportant un échangeur de chaleur tel que défini par la revendication 1.

D'autres objets, particularités et résultats de l'invention ressortiront de la description suivante, donnée à titre d'exemple et illustrée par les figures annexées, qui représentent:

- la figure 1, une courbe montrant l'échange de chaleur entre l'évaporateur et l'air d'un réfrigérateur, selon la technique connue ;
- la figure 2, une courbe analogue relative à l'échangeur de chaleur selon l'invention ;
- la figure 3, un premier mode de réalisation d'un échangeur de chaleur selon l'invention ;
- la figure 4, un deuxième mode de réalisation d'un échangeur de chaleur selon l'invention ;
- la figure 5, un troisième mode de réalisation d'un échangeur de chaleur selon l'invention ;
- les figures 6 et 7 représentent un quatrième mode de réalisation d'un échangeur de chaleur selon l'invention.

Sur ces différentes figures, les mêmes références se rapportent aux mêmes éléments.

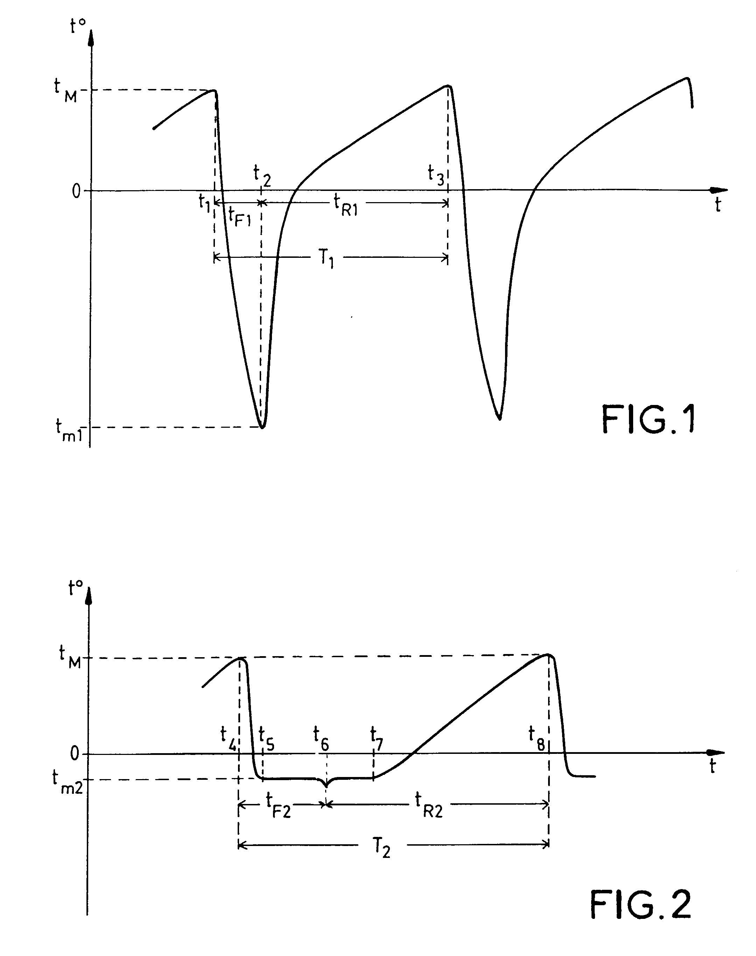

La figure 1 représente donc une courbe montrant l'échange de chaleur entre un évaporateur et l'air d'un réfrigérateur, selon la technique connue.

Sur cette figure, on a porté en ordonnée la température (t°) de l'évaporateur et en abscisse, le temps (t).

On voit qu'à partir d'un instant $t_1$ où la température de l'évaporateur est maximum (notée $t_M$), celle-ci décroît jusqu'à un instant $t_2$ à une valeur $t_{m1}$ ; la durée $t_{F1}$ = $t_2$-$t_1$ est la durée pendant laquelle les cycles d'échange de chaleur s'effectuent pour faire baisser la température de l'évaporateur jusqu'à son minimum ($t_{m1}$), qui correspond également au temps de fonctionnement du compresseur.

A partir de l'instant $t_2$, le compresseur s'arrête et la température de l'évaporateur remonte jusqu'à sa valeur moyenne maximum admise $t_M$, à un instant $t_3$ où un thermostat contrôlant la température de l'air dans l'appareil à génération de froid déclenche à nouveau le compresseur. La durée $t_3$-$t_2$ est notée $t_{R1}$ et correspond au temps de repos du compresseur.

Le cycle $t_{F1}$+$t_{R1}$ est à peu près périodique et on note $T_1$ la "période" correspondante.

Pour un réfrigérateur, la température $t_M$ généralement admise est de +6°C et, ainsi qu'exposé plus haut, on constate en pratique que, pour respecter les valeurs fixées pour $t_M$ comme pour la température moyenne de l'air (+5°C) par les normes en vigueur, on est amené à faire descendre la température de l'évaporateur à la valeur $t_{m1}$ qui est de l'ordre de -15°C à -20°C, c'est-à-dire très basse par rapport à la température moyenne de l'air. Cette valeur basse de la température $t_{m1}$ implique une pression d'évaporation relativement basse, donc un taux de compression élevé et une consommation d'énergie élevée pour le compresseur.

Le même genre de situation est observé dans les congélateurs, où la température minimale atteinte par l'évaporateur (de l'ordre de -30°C) est très inférieure à la température moyenne requise pour l'air à l'intérieur du congélateur (de l'ordre de -20°C), avec les inconvénients que cela présente pour la consommation d'énergie.

La figure 2 est une courbe analogue à la précédente mais relative à un échangeur de chaleur selon l'invention.

Selon l'invention, l'échangeur de chaleur comporte un matériau accumulateur thermique en contact conductif direct avec le fluide frigorigène, destiné à modifier la courbe d'échange de chaleur entre l'échangeur et l'air ambiant, comme décrit ci-dessous.

Comme précédemment, lorsque l'échangeur de chaleur, par exemple un évaporateur, atteint sa température maximum $t_M$ à un instant $t_4$, le compresseur se met en route amenant une diminution de la température t° de façon analogue au cas de la figure 1, jusqu'à un instant $t_5$.

A partir de cet instant, l'échange de chaleur se fait selon un palier, horizontal sur la figure 2, s'étendant sensiblement jusqu'à un instant $t_6$ ; pendant la durée $t_6$-$t_5$ correspondante, le compresseur fonctionne toujours et le cycle de refroidissement a pour effet, dans le cas représenté sur la figure 2 où le matériau accumulateur est un eutectique, le changement de phase de ce dernier (de liquide à solide par exemple) à température constante $t_{m2}$ ; à la fin du palier, on constate une descente rapide en température qui peut avantageusement servir de signal d'arrêt pour le compresseur; le fonctionnement de ce dernier est alors interrompu; la durée $t_6$-$t_4$, notée $t_{F2}$, correspond au temps de fonctionnement du compresseur. Après arrêt du compresseur, la température de l'évaporateur reste ensuite à la valeur $t_{m2}$ jusqu'à un instant $t_7$ tel que on ait sensiblement $t_7 - t_6 = t_6 - t_5$, le temps correspondant étant celui qui est nécessaire au changement de phase inverse (de solide à liquide dans l'exemple précédent) de l'accumulateur. A la fin du changement de phase ($t_7$), la température de l'évaporateur augmente à nouveau jusqu'à sa valeur maximum $t_M$ à l'instant $t_8$, puis le cycle recommence. La durée $t_8$-$t_6$, notée $t_{R2}$, correspond au temps de repos du compresseur. Comme précédemment, on peut définir une sorte de "période" $T_2$ égale à la durée du cycle $t_{F2}$+$t_{R2}$.

Les calculs et les expériences de la Déposante ont montré que, d'une part, en choisissant le matériau accumulateur pour que la température minimale $t_{m2}$ soit aussi proche que possible de (mais inférieure à) la température moyenne recherchée pour l'air et, d'autre part, en choisissant la masse de matériau accumulateur de façon appropriée, le taux de compression du compresseur était réduit et le temps total de travail du compresseur sur 24 heures était également réduit, même si son temps de travail ($t_F$) par période (T) pouvait être supérieur en présence d'un accumulateur ($t_{F2} > t_{F1}$). La quantité de fluide accumulateur est déterminée en fonction des durées $t_{F2}$ et $t_{R2}$ recherchées, en écrivant l'équation de l'échange thermique entre l'accumulateur et l'air.

A titre d'exemple, la quantité minimum d'accumulateur est donnée par l'expression suivante, dans le cas d'un fluide accumulateur à changement de phase liquide-de-solide :

$$h.s.f . \Delta T \geq \frac{m}{t} . L_f$$

où :

- h est le coefficient de convection externe (en W/m². K) ;
- s est la surface de l'échangeur (en m²) ;
- f est le facteur d'échange d'une ailette, dans le cas où l'échangeur comporte des ailettes non parcourues par l'accumulateur (coefficient sans dimension) ;
- $\Delta T$ est l'écart de température entre l'échangeur et l'air (en degrés K) ;
- m est la masse de l'accumulateur (en Kg) ;
- t est la durée de l'échange $t_6 - t_5$ (en s) ;
- $L_f$ est la chaleur latente de fusion ou de solidification (en KJ/Kg).

Par ailleurs, on a représenté sur la figure 2, entre $t_5$ et $t_7$, un palier horizontal correspondant à un accumulateur eutectique, mais le fonctionnement décrit ci-dessus est encore valable si le palier n'est pas horizontal, dès lors que l'accumulateur est un matériau à grande capacité thermique (chaleur spécifique importante) diminuant ainsi fortement la variation de température pendant la durée $t_5 - t_7$ et on parle alors, pendant cette durée $t_5 - t_7$, de température moyenne plutôt que de température fixe due au changement de phase.

A titre d'exemple, pour un évaporateur de réfrigérateur, la température d'évaporation la plus basse peut être de l'ordre de -5°C ou -4°C au lieu de -15°C à -20°C, en utilisant de l'eau comme matériau accumulateur. Pour un congélateur, on peut de même ramener la température d'évaporation la plus basse de -30°C à -25°C, ce qui peut amener un gain de rendement du compresseur de plus de 15%.

En outre, le fonctionnement décrit ci-dessus s'applique aussi bien à un évaporateur qu'à un condenseur pour machine à génération de froid. Dans ce cas, on peut utiliser comme matériau accumulateur, de l'eau dont on utilise la capacité thermique élevée, ou encore un eutectique dont le point de fusion se situe autour de 25°C.

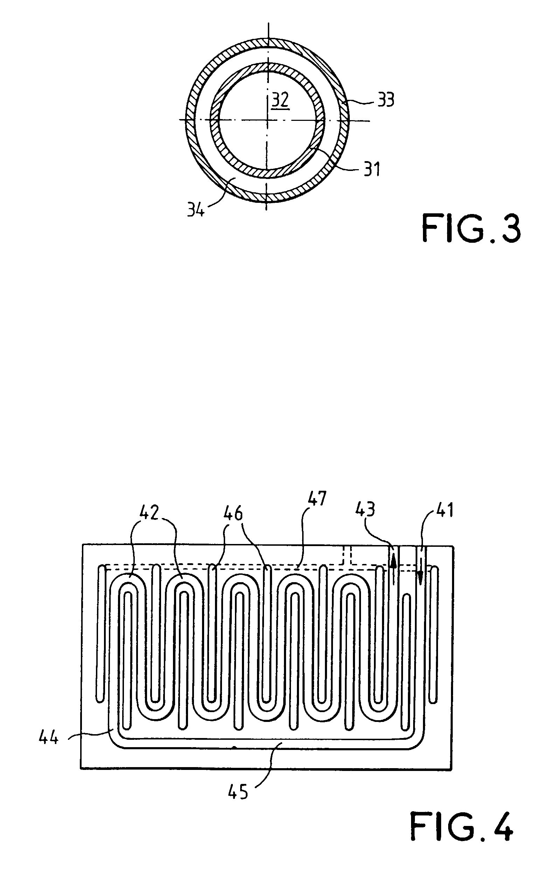

La figure 3 représente un premier mode de réalisation d'un échangeur de chaleur selon l'invention.

L'échangeur de chaleur consiste en un tube, disposé par exemple selon une surface plane et selon une ligne par exemple en serpentin. Ce tube, dans lequel circule le fluide frigorigène, est en fait constitué de deux tubes coaxiaux comme le montre la coupe de la figure 3 : un tube intérieur 31 dans l'espace intérieur 32 duquel circule le fluide frigorigène, et un tube extérieur 33, ménageant un espace annulaire 34 entre les deux tubes dans lequel est disposé l'accumulateur. Ce dernier et le fluide frigorigène sont en contact conductif direct à travers le tube 31.

Les matériaux constituant les tubes 31 et 33 sont de préférence des matériaux à bonne conductivité thermique tels que des métaux (acier, aluminium, cuivre...). Le fluide frigorigène peut être constitué par tout fluide utilisé habituellement à cet effet par l'homme du métier.

Dans une variante de réalisation, la surface extérieure du tube 33 est dotée d'ailettes (non représentées) pour favoriser l'échange thermique entre l'accumulateur thermique et l'air.

La figure 4 représente un deuxième mode de réalisation de l'échangeur de chaleur selon l'invention.

Ce mode de réalisation fait appel à la technique connue sous le nom de "Roll-Bond" et utilisée couramment pour la réalisation d'évaporateurs. Cette technique consiste à utiliser deux plaques métalliques, par exemple en aluminium, que l'on soude sauf aux endroits qui seront destinés à former les conduits de fluide. Après soudage, un fluide à très haute pression est introduit entre les plaques et vient les déformer aux endroits non soudés, formant ainsi les conduits désirés.

Sur la figure 4, le circuit de fluide frigorigène 42 est par exemple sensiblement en forme de serpentin dont une extrémité 43 constitue la sortie du fluide et l'autre extrémité 44 est par exemple reliée par un conduit coudé 45 à l'entrée 41 du fluide.

Entre les méandres du serpentin 42 sont disposés des conduits 46 dans lesquels est enfermé le fluide accumulateur. Ce dernier est en rapport conductif direct avec le fluide frigorigène circulant dans le serpentin 42 au moyen du métal réalisant la structure. Les conduits 46 peuvent être reliés entre eux par un conduit 47 (en pointillés sur la figure) permettant d'effectuer facilement le remplissage en fluide accumulateur.

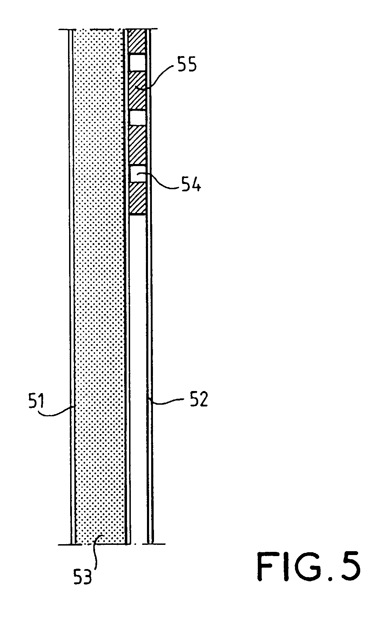

La figure 5 représente un troisième mode de réalisation de l'échangeur de chaleur selon l'invention, selon lequel ce dernier est intégré dans une paroi de l'appareil, congélateur ou réfrigérateur.

Sur cette figure 5, on a représenté, vue en coupe, la paroi extérieure 51 de l'appareil, par exemple métallique et sa paroi intérieure 52, par exemple constituée d'un plastique chargé métalliquement ; entre les deux parois sont disposés successivement, en partant de l'extérieur, un matériau 53 isolant thermique, par exemple du type polyuréthanne, puis un échangeur selon l'invention, par exemple réalisé conformément au mode de réalisation de la figure 4. Cet échangeur se compose alors de canalisations 54 parcourues par le fluide frigorigène entre lesquelles est disposée une structure 55 dans laquelle est stocké l'accumulateur. De préférence, les canalisations 54 dans lesquelles circule le fluide frigorigène sont en contact direct avec la paroi intérieure 52 de l'appareil, laquelle a une bonne conductivité thermique, pour favoriser une descente en température rapide de l'enceinte à refroidir.

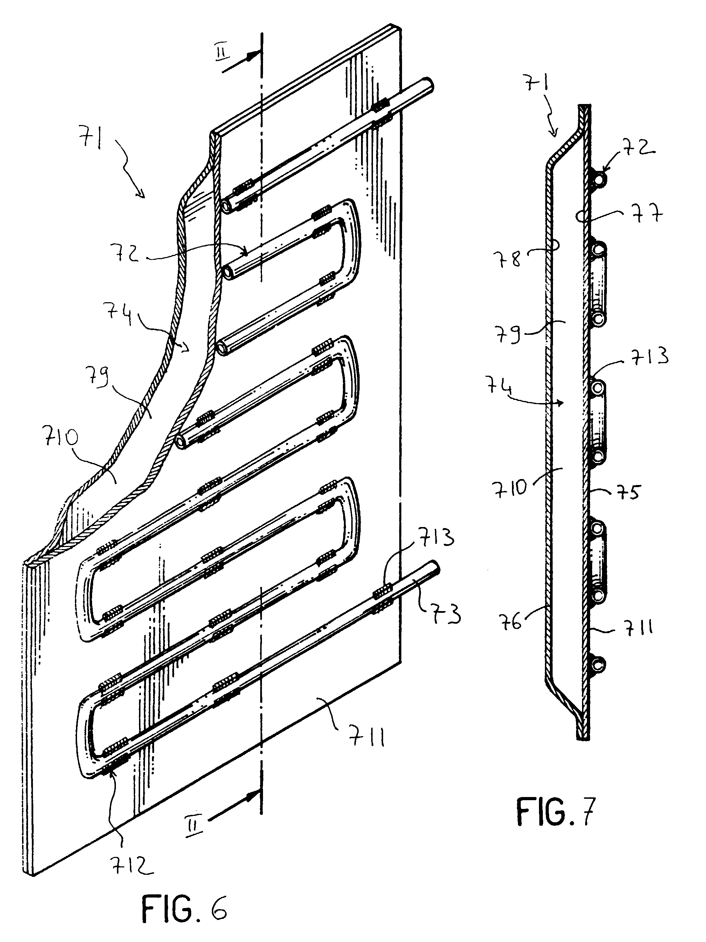

La figure 6 représente une vue en perspective en section partielle d'un échangeur de chaleur selon l'invention et la figure 7, une vue en coupe de ce même échangeur, selon une ligne I - II.

Sur ces figures, le repère 71 indique globalement un échangeur de chaleur, un évaporateur dans cet exemple, pour un appareil générateur de froid. L'échangeur 71 comporte un serpentin 72 formé d'un tube 73, par exemple métallique, parcouru par un fluide frigorigène et d'une structure 74. La structure 74 comprend deux plaques métalliques et, plus précisément, une plaque plane 75 et une plaque emboutie 76, lesquelles sont soudées entre elles le long de la périphérie des faces en vis à vis 77 et 78, de sorte à définir entre elles une chambre 79. Dans cette chambre 79 est disposé un accumulateur thermique 710 ayant une capacité thermique élevée. Le matériau 710 est par exemple un mélange d'eau et d'alcool.

Le serpentin 72 est positionné en contact thermique avec la face externe 711 de la plaque plane 75 et est maintenu solidaire de cette dernière par l'intermédiaire de moyens de fixation 712. Ces derniers moyens sont avantageusement formés de cordons de soudure 713 distribués le long du serpentin 73.

Un avantage de l'échangeur de chaleur décrit ci-dessus est, outre l'amélioration du rendement énergétique, de se prêter à des réalisations technologiques simples et donc peu onéreuses.

**Revendications**

1. Appareil à génération de froid, comportant deux échangeurs de chaleur, l'un formant un évaporateur et l'autre un condenseur, reliés entre eux par une première canalisation dans laquelle circule un fluide frigorigène, et un compresseur comprimant le fluide frigorigène, au moins un échangeur étant caractérisé par le fait qu'il comporte une seconde canalisation dans laquelle est stocké un matériau à accumulation thermique, disposé de sorte à être en rapport conductif direct avec le fluide frigorigène, ce matériau étant choisi de sorte à maintenir la température de l'échangeur à une valeur sensiblement fixe, proche de la température moyenne de l'air environnant l'échangeur, la masse du matériau étant choisie pour maintenir cette valeur pendant une durée définie, le fonctionnement du compresseur étant interrompu à l'issue de cette durée définie.

2. Appareil selon la revendication 1, caractérisé par le fait que le matériau à accumulation thermique est un matériau tel qu'il change de phase durant ladite durée définie.

3. Appareil selon la revendication 2, caractérisé par le fait que le matériau à accumulation thermique est un eutectique.

4. Appareil selon la revendication 1, caractérisé par le fait que le matériau à accumulation thermique a une grande capacité thermique.

**5.** Appareil selon l'une des revendications précédentes, caractérisé par le fait que la première canalisation est sensiblement en forme de serpentin.

**6.** Appareil selon l'une des revendications précédentes, caractérisé par le fait que la première canalisation est un premier tube et que la deuxième canalisation est un deuxième tube coaxial avec le premier, le matériau à accumulation étant un fluide disposé entre les deux tubes.

**7.** Appareil selon la revendication 5, caractérisé par le fait que la deuxième canalisation est disposée entre les méandres de la première.

**8.** Appareil selon l'une des revendications 1 à 5, caractérisé par le fait que la deuxième canalisation est formée de deux plaques métalliques soudées à leur périphérie, définissant une chambre où est stocké le matériau à accumulation thermique.

**9.** Appareil selon les revendications 5 et 8, caractérisé par le fait que le serpentin est placé et maintenu en contact avec la surface d'une des plaques à l'aide de moyens de fixation.

**10.** Appareil selon la revendication 9, caractérisé par le fait que les moyens de fixation comportent des moyens de soudure.

**11.** Appareil selon l'une des revendications précédentes, caractérisé par le fait qu'il est disposé à l'intérieur d'une paroi de l'enceinte, la première canalisation étant en contact conductif avec la surface intérieure de la paroi.

**12.** Appareil selon l'une des revendications précédentes, caractérisé par le fait que l'échangeur est un évaporateur et que l'appareil à génération de froid est un réfrigérateur ou un congélateur ou un appareil combiné.

**13.** Appareil selon la revendication 12, caractérisé par le fait que l'appareil à génération de froid est un réfrigérateur et que le matériau à accumulation thermique est de l'eau.

**14.** Appareil selon l'une des revendications 1 à 11, caractérisé par le fait que l'échangeur est un condenseur, que l'appareil à génération de froid est un réfrigérateur ou un congélateur ou un appareil combiné.

**15.** Appareil selon la revendication 14, caractérisé par le fait que le matériau à accumulation thermique est de l'eau ou un eutectique à point de fusion autour de 25°C.

FIG.1

FIG.2

FIG.3

FIG.4

FIG.5

FIG. 6

FIG. 7

**Office européen des brevets**

# RAPPORT DE RECHERCHE EUROPEENNE

Numero de la demande

EP 97 40 0524

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>Y | WO 94 05959 A (CASSELL) 17 Mars 1994<br>* page 5, ligne 18 - page 6, ligne 2 *<br><br>* page 7, ligne 1 - ligne 11 *<br>* page 8, ligne 20 - ligne 26 *<br>* figure 4 *<br>--- | 1-5,12<br>6-9,11,<br>13,14 | F25B39/00 |
| Y<br>A | GB 1 020 211 A (PORTER) 16 Février 1966<br>* page 2, ligne 50 - page 2, ligne 98;<br>figure 1 *<br>--- | 6<br>2-4 | |
| Y<br>A | US 5 239 839 A (JAMES) 31 Août 1993<br>* figure 1 *<br>--- | 7<br>2-5 | |
| Y<br>A | FR 1 050 084 A (JAMIN) 5 Janvier 1954<br>* page 2, colonne 1, alinéa 2 *<br>* figures 1,2 *<br>--- | 8,9<br>1-5,10 | |
| Y<br>A | US 2 791 106 A (KLEIST) 7 Mai 1957<br>* colonne 1, ligne 37 - colonne 2, ligne 41 *<br>--- | 11<br>2-5,8,9 | DOMAINES TECHNIQUES RECHERCHES (Int.Cl.6) |
| Y<br>A | EP 0 053 589 A (INDESIT) 9 Juin 1982<br>* abrégé *<br>--- | 13<br>1-4,12 | F25D |
| Y<br>A | NL 8 502 473 A (KOCHX) 1 Avril 1987<br>* page 1, ligne 1 - page 2, ligne 32;<br>figures *<br>& DATABASE WPI<br>Section EI, Week 8718 1 Avril 1987<br>Derwent Publications Ltd., London, GB;<br>Class X27, AN 87-127328<br>* abrégé *<br>--- | 14<br>1-5,8,<br>11,12,15 | |
| A | EP 0 098 052 A (THORN EMI DOMESTIC APPLIANCES) 11 Janvier 1984<br>* le document en entier *<br>--- | 1-4,12 | |

-/--

Le présent rapport a été établi pour toutes les revendications

| Lieu de la recherche | Date d'achèvement de la recherche | Examinateur |
|---|---|---|
| LA HAYE | 17 Juin 1997 | Goeman, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numero de la demande

EP 97 40 0524

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB 2 193 301 A (AJA REFRIGERATION) 3 Février 1988<br>* abrégé *<br><br>--- | 4 | |
| A | EP 0 664 426 A (N R DEVELOPMENT) 26 Juillet 1995<br><br>----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 17 Juin 1997 | Goeman, F |